# EUROPEAN PATENT SPECIFICATION

(11) **EP 3 086 652 B1**
(45) Date of publication and mention of the grant of the patent: **17.04.2024**
(21) Application number: 14875441.9
(22) Date of filing: 07.05.2014
(51) Int. Cl.: A23C 9/15, A23C 9/142, A23C 9/14, A23C 9/152, A23L 2/54

(54) **METHOD OF MANUFACTURING AN IMPROVED BEVERAGE**
VERFAHREN ZUR HERSTELLUNG EINES VERBESSERTEN GETRÄNKS
PROCEDE DE FABRICATION D'UNE BOISSON AMELIOREE

(30) Priority: 23.12.2013 NZ 61942213
(43) Date of publication of application: 02.11.2016
(73) Proprietor: Goodman Fielder PTE. LTD, Singapore 138568 (SG)
(72) Inventor: DAS, Shantanu, Singapore 138568 (SG); OLNEY, Sonya Dianne, Singapore 138568 (SG); SINGH, Harjinder, Singapore 138568 (SG); TANEJA, Namrata, Singapore 138568 (SG); YE, Aiqian, Singapore 138568 (SG)
(74) Representative: Greaves Brewster LLP
(86) International application number: PCT/NZ2014/000083
(87) International publication number: WO 2015/099542

(56) References cited:
- EP-A1- 0 565 596
- EP-B1- 0 565 596
- WO-A1-02/058477
- WO-A1-2013/004895
- WO-A1-2013/004895
- US-A1- 2004 219 273
- US-A1- 2010 055 290
- THOM HUPPERTZ: "Foaming properties of milk: A review of the influence of composition and processing", INTERNATIONAL JOURNAL OF DAIRY TECHNOLOGY, vol. 63, no. 4, 1 November 2010 (2010-11-01), pages 477-488, XP055218663, GB ISSN: 1364-727X, DOI: 10.1111/j.1471-0307.2010.00629.x
- STRAWBERRY FLAVOURED MILK, [Online] 01 September 2013, XP055086885 Retrieved from the Internet: <URL:HTTP://WWW.GNPD.COM/SINATRA/RECORDPAGE /2184364/FROM_SEARCH/AJK1XXYVM9/>> [retrieved on 2014-09-24]
- HENNING, D.R. ET AL.: 'Major advances in concentrated and dry milk products, cheese and milk fat-based spreads'.' JOURNAL OF DAIRY SCIENCE vol. 89, no. 4, 01 April 2006, pages 1179 - 1188, XP026938603 DOI: 10.3168/JDS.S0022-0302(06)72187-7

## Description

### TECHNICAL FIELD

The present invention relates to a method of manufacturing a dairy-based beverage, as defined in the appended claims. The obtained dairy-based beverage retains certain desirable sensory perception characteristics such as a good mouthfeel and perceived thickness.

### BACKGROUND ART

There is a commercial benefit to providing many beverages, and in many cases foods, which have desirable sensory characteristics, such as flavour, mouthfeel, texture, smoothness/creaminess, and overall indulgency.

Often this is achieved by ensuring a high amount of fat content is present in the beverage, which generally provides all of these characteristics. A good example of this are thick-shakes as produced by fast-food outlets such as Wendy's^{™}, McDonalds^{™} and so forth, which will have thick-shakes with a fat content significantly higher than say standard market milk (3.3% fat), sometimes in the order of up to 9% or more. The products are certainly desirable from an indulgency perspective.

Yet given the high fat and high calorie content in these beverages, they can be disadvantageous from a health perspective, as both a high calorie and high cholesterol diet are associated with a range of health issues such as obesity and heart disease. There is a definite need and desire from the public for beverages that retain these desirable sensory characteristics, yet are also healthier.

An important characteristic of thick-shake is bubbles/froth, which is created by adding ice-cream. This froth has a positive impact on mouthfeel. However the addition of ice-cream not only increases the concentration of fat but also has other negative impacts - firstly, it's not available everywhere and secondly it contains various non-dairy ingredients such as emulsifiers.

An alternative to thick-shakes are milkshakes which lack ice-cream and subsequently have a lower fat content. However a disadvantage of milkshakes is a loss of sensory characteristics, particularly the indulgent mouthfeel provided by a high fat beverage.

In attempt to address these problems, various products and/or methods have been developed.

For example, NZ 563869 is directed towards using hydrophobin proteins and a surfactant to better retain gas bubbles within food products to improve the texture.

NZ 587796 is directed towards using alternan (polysaccharides made up of glucose units) as a thickening agent for various foodstuffs or beverages. Even within this document, there is reference to many thickening agents such as starch, gums, and so forth that are well known as conventional thickening agents to improve overall mouthfeel of a product without resorting to, in some cases, increased fat content.

NZ 552132 discloses an acidic milk drink that has a low fat, low calorie acidic milk drink yet with achieving a good flavour and light texture. It relies on inclusion of polydextrose and sugar.

In another example, US 2007/0065555 discloses a stabilised dairy foam which includes milk, a surfactant, a polysaccharide and a polymer.

In NZ 564378, methods of preparing frothy milk based beverages such as cappuccinos are described, including conventional techniques such as applying pressure and heat to produce bubble formation.

In other examples such as US 201 1/0244076, CN 101156629B and WO1996/033618, carbonation techniques are described in milk-based beverages for a number of reasons. However, these processes require pressurized gas (typically CO₂ or N) which has a number of disadvantages.

First, carbonation requires specialized techniques and equipment, such that the beverage cannot be made conveniently like using mechanical aeration techniques. Second, in the context of milk based products, the fizzy texture from carbonation is not what many users are used to nor desire - such that carbonation is more often not only applied to non-dairy based soft drinks. Third, and again in the context of milk based products, the pH of the milk-based product decreases once carbonated, and this can lead to undesired stability issues with beverages such as coffee, which already lowers the pH somewhat.

EP 0 565 596 A1 describes compositions which are capable of being converted to frozen dairy products, including ice cream and yoghurt desserts, which have organoleptic qualities comparable to high fat frozen desserts such as ice cream.

US 2010/055290 A1 describes heat stable concentrated dairy liquid and cream products exhibiting enhanced fresh dairy flavor notes.

US 2004/219273 A1 describes a method for directly using acid cheese whey and or its by-products from conventional cheese production to make other high-value food products, such as creamy dairy products.

WO 2013/004895 A1 describes milk-based formulations with a reduced carbohydrate content.

Huppertz et al., 2010 (International Journal of Dairy Technology, Vol. 63, No. 4, pp. 477-488) reviews the compositional and processing factors affecting the foaming properties of milk.

These documents exemplify the need and the lengths to which the industry has gone to develop substitutes which provide good sensory characteristics without resorting to high fat products.

However, the main disadvantages of such products include:
- Resorting to exogenous components such as gum or hydro-colloidal components (i.e. exogenous non-dairy components) to achieve the sensory characteristics, and/or improved volume retention. This is undesirable from a public perspective. The public prefers to have a product with a minimal amount (or none) of non-natural additives.
- Some of the added components may lead to a displeasing flavour or texture, despite improving the viscosity and/or bubble retention.
- The components may inconveniently lead to added manufacturing costs, complicated processing, or difficulty in its use.
- Despite aiming to achieve good bubble formation in cases such as US 2007/0065555 or NZ 564378, the persistency of the bubbles may be poor, meaning that the end user may only have a short period to consume their beverage before the mouthfeel subsides.
- In cases such as NZ 564378, the methodology and products may be overly complicated, inconsistent, and/or only be applicable to hot drinks. It would be beneficial to have a product that is easy to prepare and is applicable towards cold beverages.

It is an objective of the present invention to address the foregoing problems or at least to provide the public with a useful choice.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the following description which is given by way of example only.

### DISCLOSURE OF THE INVENTION

According to a first aspect of the present disclosure, which does not form part of the invention but is disclosed for illustration purposes, there is provided an aerated beverage characterised in that
the beverage includes a base containing recombined milk.

According to a further aspect of the present disclosure, which does not form part of the invention but is disclosed for illustration purposes, there is provided a dairy product including recombined milk
characterised in that
the dairy product includes a milk-based retentate.

According to a further aspect of the present disclosure, which does not form part of the invention but is disclosed for illustration purposes, there is provided a method of manufacturing an aerated beverage
characterised by the step of
incorporating a base containing recombined milk into the beverage.

According to the present invention there is provided a method of manufacturing a powdered or liquid dairy product
characterized by the step of
combining:
a) a recombined milk, or dried or liquid component thereof, with
b) a milk based retentate, wherein the milk-based retentate contributes 30 to 70% w/w of the total protein of the dairy product;

wherein the milk-based retentate is denatured prior to combining with the recombined milk, or dried or liquid components thereof; and
wherein the denaturing step includes heat denaturation at a temperature of between 85-90°C for a period of 20 to 40 minutes.

The method of the present invention makes simple yet clever use of a known component, recombined milk, as a base to prepare aerated beverages. In particular, the concept of aeration of recombined milk has shown surprisingly beneficial qualities to produce beverages that have good bubble formation, good bubble persistency, and importantly also good sensory-perception characteristics as judged by an experienced professional panel.

Until now, no-one has thought to use recombined milk specifically to prepare beverages which overcome the problems highlighted in the background art. Until now, it has been industry practice to either use foreign (i.e. non-dairy) thickening agents, or simply to increase fat content in order to achieve a beverage with desirable qualities such as mouthfeel. These have numerous problems as previously highlighted.

Conversely, milk powders and recombined milk have typically only been used to date to provide improved flavour, improving opacity and functionality in products other than beverages such as cheese, ice cream, and yogurt.

Recombined milk made from skim milk powder and milk fat has been particularly beneficial for countries with insufficient supply of milk, as the powders can be easily stored and shipped to a desired location before recombination.

Also, ultra-high temperature (UHT) treatment of recombined milk in liquid form has provided a further avenue to use recombined milk with longer shelf life for various purposes.

The method of the present invention has provided a very commercially applicable solution, as it requires only dairy based products, provides options to achieve the desired results without resorting to high fat, relies on a base product already used and is well accepted by the public, and is easy to store and ultimately use.

It should also be appreciated that the inventors of the present invention are all food scientists with established track records in the industry. One co-inventor in particular is not only a food scientist, but has worked with and processed recombined milk for a number of years in India, where recombined milk is a staple product due to the low levels of milk production in various regions of the country.

Further advantages of the present invention and its preferred features will become apparent with the ensuing description.

### Definitions and Preferred Embodiments

Throughout the specification, the term "aerated" or variations thereof should be taken as meaning a beverage which has been adapted, developed, or prepared to include air or gas bubbles (i.e. typically, although not solely, atmospheric air) dispersed homogenously within, or just within a portion of, the beverage for a period of time.

It should be appreciated that the term aeration should not be confused with the well known process of carbonation, the latter which utilises gas (C0₂) under pressure to create bubbles. Aeration, on the other hand, requires mechanical energy to help create the bubbles. The use of recombined milk according to the method of the present invention helps to produce such bubbles under mechanical aeration, improve stability and provide a number of other benefits which will be discussed throughout this specification.

Therefore the present disclosure of forming an aerated beverage using recombined milk does not correspond to previously known carbonation techniques. However, it should be appreciated that the method of the present invention could also be used with carbonated beverages if so desired. In many aspects of the present invention, carbonation is seen to be disadvantageous as it lowers the pH of neutral milk. In one example, coffee lowers the pH of milk, so application of carbonation techniques would disadvantageously lower the pH further and result in stability issues which are avoided by the present invention.

Throughout this specification, the term "bubbles" should also be understood to encompass a foam within or as part of a liquid, and so forth.

Throughout the specification, the term "base" should be taken as the meaning an ingredient or component which includes the essential feature of the invention, the recombined milk, and which serves as the platform for which all the aerated beverages are prepared. Although the base containing the recombined milk is the essential feature of the beverage, the beverage may also include other components (such as flavourings or other excipients) that are used to differentiate it into a specific type of beverage, for instance a cappuccino or a thickshake.

It should be appreciated that the base may be provided into the beverage as a powdered form, a solid form and/or as a liquid form (or combinations thereof), at which point they are combined to become recombined milk. For instance, conventional recombined milk may include a milk-fat solid and a skimmed milk powder as discussed further below. In this example, the base may be provided as a solid and a powder, which then becomes recombined milk once homogenously mixed within the beverage.

Throughout the specification, the term "beverage" should be taken as meaning any liquid fit for animal (typically human) internal consumption. Examples include, but are clearly not limited to, cold drinks such as milkshakes, thick-shakes, smoothies, frappuccinos, or hot drinks such as hot chocolate, fluffies (frothy hot milk drinks for children), or coffee-based drinks, or a frothy portion thereof, such as mochaccinos, cappuccinos, and so forth.

The method of the present invention may also be used for nutritional or medicinal based beverages, for instance to improve the flavour, texture and mouthfeel of either medicines or supplements or as a carrier of functional ingredients.

In a further context of the specification, the term "beverage" should be understood to also encompass food products that have a liquid or semi-liquid based composition. For example, the method of the present invention could be utilised for desserts which normally are heated or cooled in order to increase volume or overall mouthfeel before eating. The method of the present invention provides an alternative to such foods, where the volume or overall mouthfeel may be provided via aeration of the recombined milk.

Throughout the specification the term "dairy product" should be taken as meaning any ingredient, component, powder or liquid which includes milk-derived elements. This would encompass a dried milk powder which was derived from recombined milk, for example.

Additionally, the term "dairy" should not be limited to milk from cows or goats, but should also encompass other milk sources such as buffalo, sheep, horses or camels for example.

Preferably, the aerated beverage only has dairy-based components in its base to which is added various flavourings to create the final form of the beverage.

A goal of the project was to develop and market a base for aerated beverages that only utilised dairy-based components.

The utilization of only milk components has a commercial advantage over products that have reverted to the addition of foreign or exogenous components, which often are non-dairy, such as hydrocolloids. Not only is this advantageous from a public viewpoint as providing a more "natural" product, but it also avoids complicated processing techniques and increases in costs, and potential instability which might arise from combining multiple components that don't normally co-exist.

Throughout the specification, the term "bubble retention" should be referred to frequently and should be understood to mean the extent, duration and/or persistency of the increased volume of the beverage due to foam/air/gas entrapped within the beverage following aeration. An acceptable level of bubble retention will depend on the circumstance. However, in most cases a beverage is normally consumed within 20 minutes, so an acceptable duration would be approximately this timeframe or more. As will be seen in the examples, bubble duration is measured through total (liquid and foam) volume vs. time.

Throughout this specification, there is also frequent reference to sensory perception data. This sensory data was provided by a trained panel of 7-10 members, who evaluate dairy products year round. The panel has been trained for dairy sensory characteristics. For every attribute, they are provided with a guideline. For example, when assessing overall mouthfeel out of maximum score of 9, stiff creamy chocolate mousse would score a 9 for mouthfeel scale, a thick-shake (> 9% fat) would score a 7 and latte made out of regular market milk (3.3 % w/w fat) would score a 5. The panel proved to be very consistent in describing and scaling the various attributes. The sensory data covers froth volume (visually), mouthfeel (connected to froth type and stability), creaminess of the film, overall flavour and finally, the thickness/body of the beverage. These are all attributes that contribute to a beverage which is aimed at providing a drink with a feeling of indulgency, flavour and overall feel.

Throughout this specification, the term "recombined milk" should be taken as meaning a milk product made by combining a milk fat component, a non-fat milk component, and a fluid such as water or skim milk or milk. Furthermore, the term recombined milk should be understood to be different to reconstituted milk, that latter of which is where no milk fat component is added separately.

Most typically, the milk fat component is anhydrous milk fat, or freshly frozen milk-fat for recombining (FFMR), or butter, or ghee.

Most typically, the non-fat milk component is skimmed milk, or skimmed milk powder, or a partially defatted milk (powder), or concentrate, or dairy protein powder (such as casein powder or whey protein powder or milk-protein powder) or their combinations. In the event skimmed milk is used, it may not be necessary to include a fluid such as water, and the milk fat component may simply be recombined with the milk.

It is clear that recombined milk may be configured to have substantially any level or amount of fat, depending on the amount and ratio of fat component added to the other components present. Similarly, the recombined milk may be configured to have any level or amount of non-fat component, for instance in recombined evaporated milk or recombined sweetened condensed milk.

Preferably, the recombined milk has a fat content below 9% w/w.

A key and unexpected advantage is that, despite configuring the fat content at a low level, such as 5% or below, the advantageous sensory perception and bubble retention results of the present invention were surprisingly comparable to the target control (with high fat level up to 9%).

Most preferably, the recombined milk has a fat content between approximately 0.5 to 4.5% w/w.

A further important and unexpected advantage of lowering fat content well below 9% w/w was a significant improvement of bubble volume and retention. As an example, when the fat content in the recombined milk was decreased from 3.3% to 1.5 % w/w, bubble volume and retention not only was maintained, but actually was shown to improve. This subsequently led to an improved mouthfeel. This is contrary to conventional understanding, where higher amounts of fat content are added generally to improve mouthfeel.

Additionally, sensory perception results showed that despite a lower amount of fat, overall mouthfeel, texture and so forth all did not suffer as a consequence.

An added benefit of these unexpected results is that both bubble retention and sensory perception are maintained, and simultaneously may provide a much healthier option due to the lower fat content.

In comparison to the market control products (1.5% and 3.3% commercial pasteurized milk), the method of the present invention showed a remarkable ability as a base to be used for preparing aerated beverages with good sensory characteristics and bubble retention.

Preferably, the recombined milk is substantially void of phospholipid.

More preferably, the recombined milk has between 0.0 to 0.02 % w/w phospholipid content.

Milk-fats such as FFMR, AMF, ghee or butter are all substantially void of phospholipid.

Most preferably, the recombined milk has less than 0.01 % w/w phospholipid.

The inventors found the inherently lower levels of phospholipids in conventional recombined milk have an important implication on improving volume (due to foaming) and bubble retention. Substituting cream or buttermilk (both introducing phospholipids) for the milk-fat or non-fat milk in recombined milk significantly diminished the volume and bubble retention over time.

Without being bound by theory, it is thought that the phospholipids compete with milk proteins for the water-bubble (air) interface, which could cause bubble instability and collapse.

It should be appreciated that conventional practice of preparing recombined milk is to use anhydrous milk fat that does not contain phospholipids. This reduces the extent of oxidation, which can lead to off-flavours and discolouration. While avoidance of oxidation is beneficial, this conventional practice does not teach towards the use and unexpected benefit towards bubble formation and retention in recombined milk, nor the advantages of retaining low levels of phospholipids.

Instead, the commercial benefit of anhydrous milk fat is for a better shelf-life, because of low moisture and low phospholipid content.

### Preferred inclusion of a milk-based retentate

Preferably, the aerated beverage includes a milk-based retentate.

Throughout the specification the term "milk-based retentate" should be taken as meaning a retained portion (typically high in protein content) of a milk which does not pass through a cross flow membrane or filter, and therefore can be collected and used for a particular purpose. In the context of milk, retentates are well characterised and utilised (Properties of Ultrafiltrated Skim Milk Retentate Powders, Journal of Dairy Science, Volume 69, Issue 2, Pages 329-339, February 1986)*.* The methodology for producing the retentate according to the present invention may rely on any such processes to prepare the retentate.

The inventors sought to further improve the bubble formation and retention as well as retain and/or improve further on sensory perception results.

Also, a preferred commercial aspect of the method of the invention was to only utilise dairy based ingredients to improve on results, as this would have significant public approval compared to prior art beverages aiming to achieve similar results.

Therefore, this self-imposed preference made the task of improving the results significantly more difficult, as conventional approaches using non-dairy based ingredients were left aside (although it should be appreciated that the method of the present invention could include non-dairy based ingredients). A number of experiments were performed, including trialing the addition of skimmed milk powder and/or denatured whey protein from milk, which the inventors hypothesized might possibly improve viscosity, bubble retention and overall sensory perception results.

The addition of skimmed milk powder increased viscosity of the beverage somewhat, yet bubble retention did not improve as expected. Furthermore, overall taste diminished to some extent. Therefore, this did not seem like an especially useful avenue to explore further.

Increasing protein content of baseline recombined milk by addition of 0.8 % w/w protein from heat denatured whey protein solution of different concentrations (2 %, 4 %, 8 % w/w) did not improve the mouthfeel. In terms of bubble retention, there was only a minimal improvement in milks containing 2% w/w (heat denatured) whey protein solution whereas at higher concentrations (4 and 8% w/w) bubble retention actually slightly diminished. Therefore, this experiment showed whey protein was not a particularly useful component to add to the recombined milk.

After considerable experimentation, the inventors then turned to trialing the addition of a milk-based retentate.

Addition of a milk-based retentate to the recombined milk beneficially improved the bubble retention, but it did not have any significant impact on mouthfeel.

However, addition of heat treated milk-based retentate surprisingly and significantly not only improved total volume and bubble retention over the entire 20-minute trial period, but also significantly improved overall sensory perception results (mouthfeel) compared to the baseline recombined milk sample. The heated retentate-recombined milk sample even compared to or outperformed a formulation made with commercially available non-dairy thickener (carrageenan - a hydrocolloid) in terms of mouthfeel. This was a further significant breakthrough to improve on the base invention.

Preferably, the milk-based retentate is substantially devoid of fat and/or lactose.

This preference is aimed at not incorporating any unnecessary fats or phospholipids into the beverage, for reasons discussed previously.

Preferably, the milk-based retentate is an ultra-filtrated retentate.

Ultra-filtration (UF) is a low pressure fractionation of selected milk components by molecular size. UF separates on the basis of molecular weight and the molecular weight cut off (MWCO) can range from about 1000 to 300,000. The portion of stream which passes through membrane is referred as permeate. The remainder of the stream, termed retentate, contains the solutes or suspended solids which have been rejected by the membrane. Depending on MWCO selected, the membrane will concentrate high molecular weight species while allowing dissolved salts and low molecular weight materials to pass.

UF membranes are used in numerous industries for concentration, clarification and diafiltration of large process streams. Our UF plant for retentate production uses a polyethersufone (PES) spiral wound membrane organized into three loops (modules) with MWCO of 30,000. This membrane is commonly used in dairy industry to concentrate whey and casein proteins, skim and whole milk for various dairy applications such as milk standardization for cheese/yoghurt, fat removal and protein/calcium fortifications in milks/yoghurt.

The milk-based retentate is heat treated to denature (fully or partially) the whey proteins.

This is because in preliminary trials, the inventors found that denaturing the proteins in the retentate by heating substantially helped to increase viscosity of the resulting beverages, and in doing so further improved bubble retention. This treatment also was found to improve overall sensory perception results.

It should be appreciated that denaturing a milk-based retentate is not a standard practice. Without wishing to be bound by theory, the inventors think that, because the retentate includes both casein and whey protein, heat treating the retentate causes the whey protein to denature. It is possible the whey protein present in milk, once denatured, binds to casein micelles and leads to different characteristics than seen with just heating the solutions containing only the whey proteins. When whey protein alone is heated (as per the preliminary trial), it didn't give desired foamability characteristics as seen with the heat treated retentate samples. These different additions surprisingly led to quite different results, both from a bubble retention perspective, as well overall sensory perception results.

Heat treatment may be performed through numerous methods as described further below.

Preferably, the recombined milk includes at least 1% w/w protein.

Preferably, the recombined milk includes between 1 to 10% w/w protein, more preferably 3 to 8 % w/w, and most preferably 3.5 to 6 % w/w.

The minimum protein level tested thus far in the recombined milk samples was 3.5% w/w, however it is reasonable to expect that this is not the minimum amount which still provides the desired effects. The most optimum protein level seen in initial trials was at 5.7% w/w as reflected in the results.

Although the non-fat milk component (e.g. skimmed milk powder) in recombined milk contributes some of the total protein, the inventors found that by increasing the protein content of the recombined milk through addition of retentate significantly improved overall results, particularly bubble retention properties. As noted above, simply increasing the skimmed milk powder content did not improve bubble retention properties to any real extent.

The milk-based retentate contributes between 30 to 70% w/w of the overall protein to the dairy product.

Preferably, the milk-based retentate contributes approximately between 40 to 60% w/w of the overall protein to the recombined milk, dairy product or aerated beverage.

The inventors found that when the retentate contributed more than about 70% w/w to the overall protein, then the final product became overly diluted and/or watery. This led to a loss of overall mouth feel.

As a comparative example (not according to the invention), a test product was prepared such that the retentate contributed 75% w/w of the total protein (4.3% w/w protein from the retentate out of a total of 5,7% w/w protein). This was made by combining about 35.6 g retentate, 36.5 skim milk, 1.4 milk fat (FFMR) and 26.4 grams water to make up to 100 g of final product. Contrary to expectations, the sample was very watery and had a poor mouth feel which may be due to low total solid content in the final product as retentate is devoid/low in lactose.

Oppositely, the inventors found that the retentate contributing less than about 30% w/w to the overall protein was disadvantageous because as the protein level, particularly from the retentate lowers, the body and texture of the product, including bubble stability, diminishes substantially.

The benefits were even more pronounced in the most preferred range of 40-60% w/w, and approximately 50% was seen as the most optimal amount.

A number of documents disclose a combination of recombined milk and a retentate for purposes such as body building supplements with high protein levels, or providing a beverage which avoids lactose intolerance (e.g. WO 2012/110705 or WO 2012/056106 respectively). Yet, these do not disclose the concept of providing a base for producing stable aerated beverages with good mouth feel, nor do they teach or motivate the reader towards using this particular range wherein the retentate to contribute 30-70% w/w of the protein to provide the advantages seen in the present invention.

A further advantage of the retentate contributing more than 30% w/w of total protein is that the retentate is rich in calcium. Therefore, the beverages according to the present disclosure may easily provide about 50% of RDI of calcium, assuming a serving size of 200 mL.

The studies performed thus far indicate the most beneficial results were present when the milk-base retentate contributes about 40-60 % w/w of the total protein in the recombined milk.

### Method of preparation

In the context of the present disclosure, which does not form part of the invention but is disclosed for illustration purposes, it should be appreciated that method of manufacture of the aerated beverage can encompass at least the following scenarios (or combinations thereof):
a) wherein the recombined milk either forms the whole of, or a part of, a pre- prepared beverage well before the intended aeration and consumption (e.g. as a pre-made stored drink);
b) wherein the recombined milk is used on its own as the actual beverage (without addition to another beverage or liquid base) for subsequent aeration; and/or
c) wherein the recombined milk is provided as base ingredients (e.g. milk-fat, non-fat milk solids) for subsequent preparation of an aerated beverage and consumption.

Taking these scenarios into account, the following are discussed.

Conventional methods may be used to prepare the recombined milk. Typically, this would include combining milk-fat and skimmed milk powder in water (to volume). As is illustrated throughout the specification, the preferred range of the total fat is less than 9% w/w and more preferably at approximately 1-5% w/w. The amount of non-fat milk solids (e.g. skimmed milk powder) may be altered as well to suit particular needs.

In making the dairy product containing recombined milk and a milk-based retentate, this also may include various scenarios, including preparing a liquid based mixture or a powder based mixture. It should also be appreciated that the dairy product may also be made by mixing the retentate with skimmed milk, and then drying down the mixture to a powder. For example, preliminary studies showed that using a recombined milk spray-dried powder that is reconstituted retained most of the beneficial properties.

A method of preparing the milk-fat to be substantially void of phospholipids may be prepared through a phase change process, i.e. a fat in water emulsion (cream) that has been converted to water in fat emulsion (butter etc.). During the phase change process (e.g. churning) butter milk may be separated as a by-product which contains majority of phospholipids.

Preferably, the method includes adding a milk-based retentate to the recombined milk and/or beverage including the recombined milk. Clearly, the retentate could alternatively also be added to a component of the recombined milk, such as the non-fat milk powder, for subsequent recombination and use. As a further alternative, the retentate (in liquid or powdered form) may be added to skimmed milk (either as a powder or liquid) before then adding a milk-fat solid.

The milk-based retentate is denatured.

To denature the retentate the method of the present invention uses heat denaturation. One advantage of this process is that it avoids the use of non-milk based substances to denature the retentate, which is a particular commercial aim in preparing the dairy product.

The method includes heating the milk-based retentate before it is added to the recombined milk and/or beverage including the recombined milk.

As discussed above, the heated retentate produced better results than use of the unheated retentates. Without wishing to be being bound by theory, the inventors think this is because the proteins aggregate formed by heat treatment adsorb onto the bubble-water interface which in some way improves the bubble retention.

The retentate is heated between 85-90°C for a duration of 20-40 minutes.

Surprisingly, the foaming characteristics of the beverage were significantly heightened when the latter conditions were used.

Preferably, the milk-based retentate has been prepared through ultra-filtration.

The advantages of using ultra-filtration methods include that no coagulation of protein occurs, it is a very common and easy process, it is non-erosive, requires no chemical treatment, uses existing capabilities of most plants, and is in liquid form.

Optionally, the method includes adding either additional amounts of skimmed milk powder and/or denatured whey protein. Although studies have shown that these did not significantly improve results when added to recombined milk on their own, it is possible that in combination with a retentate, or with each other, a more substantial effect might be seen.

Preferably, the method includes agitating the beverage to introduce entrapped bubbles into the beverage.

The inventors have trialed two different whisking speeds (9000 rpm and 13000 rpm) for the test samples. It was surprisingly found that at both high and low speeds, the beneficial bubble formation, retention and sensory-perception results were substantially better than the market control product (1.5% fat commercial pasteurized milk). Even at low whisking speed (9000 rpm), which may more desirable from a usage perspective, the test samples was comparable to the Carrageenan test sample, (0.035% carrageenan added to baseline control product) and outperformed it on the grounds of overall mouthfeel and creaminess.

These results are significant, as it means the ease of use and reproducibility of the invention may be substantially better than compared to previous techniques to produce a frothy beverage. For example, in NZ 564378 it describes a complicated process of using pressure and temperature and then tries to manipulate and/or improve this process to improve the quality of froth/bubble formation in hot milk-based beverages. The current invention does not rely on pressure or steam in order to produce the beneficial results, and the longevity of the bubbles is also remarkably improved.

Another significant advantage of the present invention is its versatility to both hot and cold (or intermediate temperature drinks). Many conventional drinks or processes such as that described in NZ 564378 are essentially limited to one or the other. Commercially, having a solution to the problems that satisfies both hot and cold beverage requirements is hugely beneficial.

In one very useful embodiment, the invention is provided as a ready to drink (RTD) beverage that can be aerated by shaking before drinking in a bottle itself or in a closed container.

### Summary of the advantages of the method of the present invention:

- The desirable effects seen in the sensory perception trials is imparted by the bubble quality, and bubble retention are not reliant on a high fat or high calorie drink such as a thick-shake. Therefore, the indulgent, good mouthfeel may be provided without the unhealthy aspect to the drink;
- The results may be achieved even when the product is fully derived from milk components, an important commercial advantage and focus of the applicant's invention. This reflects that in New Nutrition Business 2014 forecast, natural functionality is the number 1 predicted trend;
- Comparable or improved bubble retention compared to positive market controls (e.g. 1.5% or 3.3% w/w fat pasteurized milk and the commercial formulation containing Carrageenan);
- Similar or improved sensory perception compared to market controls (as above);
- Unlike many of the prior art products and techniques, the current product and its use is applicable to both hot and cold drinks;
- The concept relies on a known product, recombined milk, which is already well used and accepted by the public.
- The method of use is very simple compared to prior art methods using techniques such as pressure and heat to froth milk. Commercially, this is a very important advantage.
- The concept applies to commercial use of an ingredient (recombined milk or even its components) together with simple instructions to a third party to prepare an aerated beverage.
- The method of the present invention may be used towards hot, ambient or cold temperature beverages. In the past, cold application has been particularly difficult. This innovation is considered to be particularly ground-breaking in relation to development of froth formation and retention in cold beverages but it may also be applied to both hot or ambient beverages and provide very beneficial results.

### BRIEF DESCRIPTION OF THE DRAWINGS

Further aspects of the present invention will become apparent from the ensuing description which is given by way of example only and with reference to the accompanying drawings in which:
- Figure 1: Results from Example 4 - testing recombined milk to produce an aerated liquid;
- Figure 2: Results from Example 4 - sensory perception data;
- Figure 3: Results from Example 5 - functional properties of recombined milks after spray drying;
- Figure 4: Results from Example 6 - effect of phospholipid content on bubble formation and stability;
- Figure 5: Results from Example 7 - effect of adding more skimmed milk powder (SMP);
- Figure 6: Results from Example 7 - sensory perception data;
- Figure 7: Results from Example 8 - effect of adding heated whey protein concentrate (WPC);
- Figure 8: Results from Example 9 - effect of adding an ultra-filtrated (UF) milk-based retentate;
- Figure 9: Results from Example 9 - sensory perception data;
- Figure 10: Results from Example 10 - effect of heating the milk-based retentate;
- Figure 11: Results from Example 10 - sensory perception data;
- Figure 12: Results from Example 11 - sensory perception data resulting from high speed whisking trials;
- Figure 13: Results from Example 11 - sensory perception data resulting from low speed whisking trials;
- Figure 14: Visual froth comparison of controls vs beverage obtained by the method according to the present invention over time;
- Figure 15: Flowchart of the method steps of Example 2.

### BEST MODES FOR CARRYING OUT THE INVENTION

Any of the following Examples falling outside the scope of the appended claims are presented herein to aid the understanding of the invention and disclosure.

### Example 1 : Exemplary recombined milk including an UF milk-based retentate

| Component | Amount (% w/w) |
|---|---|
| Milk fat (FFMR) | 1.5 |
| Skimmed milk | 73.875 (providing 51 % of total protein) |
| Heat treated UF retentate | 24.625 total (providing 49 % of protein |
| Water | To vol ume |

| | |
|---|---|
| NB: the total protein equates to 5.7% w/w, provided by both the SMP and UF retentate. The total solids (TS) equates to 12.6% w/w | |

### Example 2: Method of Manufacture of the recombined milk with retentate

1. Milk fat (FFMR) heated to 50 °C is mixed with mixture of skim milk and heat treated UF retentate heated to 50 °C.
2. This mixture is pre-homogenized in a high shear mixer (such as a Silverson) for 2 min at 10000 rpm.
3. The pre-homogenized mixture is heated to 65-70'O and then homogenized in a 2-stage homogenizer at 200/50 bar.
4. The homogenized mixture is then pasteurized at 74°C for 15 seconds and filled in bottles. Alternatively, the homogenized mixture may be UHT treated at 142°C for 4 seconds. The same functionality was observed with either treatment at this step.
5. This recombined milk may then be stored or used immediately for aeration purposes before consumption.

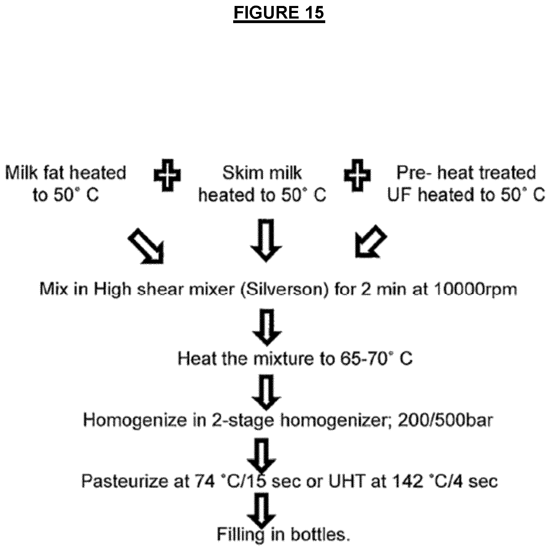

The method steps of Example 2 are also illustrated in Figure 15.

It should be appreciated that the mixture (recombined milk containing retentate) can be spray dried, for instance to form the dairy product. For example, the drying method can be freeze drying, drum drying or tray drying.

### Example 3 (not according to the present invention): Method of aerating the recombined milk containing beverage

1. Prior to consumption, the recombined milk components are recombined into a solution, if this has not already been done.
2. Aeration of the cold recombined milk-containing beverage is done by whisking the beverage by hand mixing or mechanical mixing at a speed of 1000-15000 rpm for approximately 10-120 seconds.
3. In another use, ready to drink (RTD) beverages can be prepared using the recombined milk composition and packed in bottles or carton after pasteurization/UHT/hot fill/Tunnel pasteurization. Preferably some headspace will be provided in the packaging.
Shaking of the bottle/carton will create broth/bubble within the beverage, which will subsequently enhance the sensory characteristics

It should be appreciated that although preliminary tests were performed with a cold beverage, it is expected that application to hot beverages may be more common.

The tests were performed on a cold beverage as foam stability was seen by the inventors as more of a potential technical issue compared to hotter conditions.

### Example 4 (not according to the present invention): Testing recombined milk to produce an aerated liquid

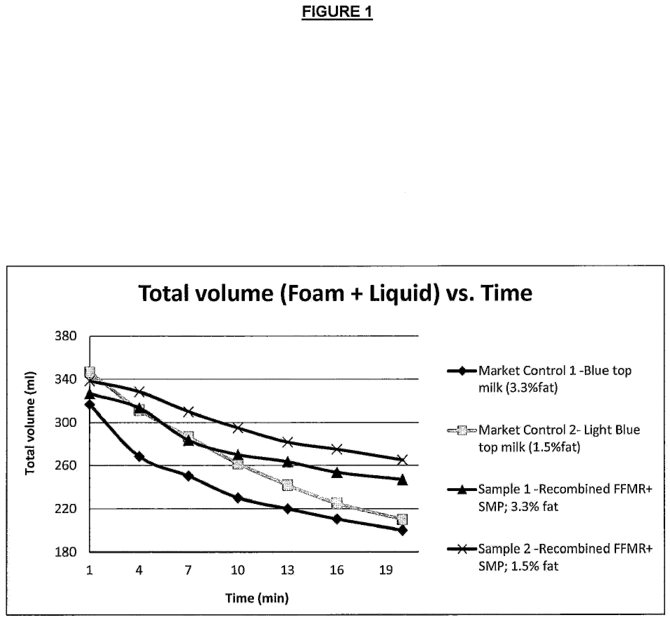

This study assessed the ability of recombined milk to increase in foam volume as a result of aeration, and then the duration of volume (bubble and liquid) retention over time. The controls were 1.5% and 3.3% w/w fat containing commercially available pasteurized milk. The test samples were 1.5% and 3.3% w/w fat recombined milk. As shown in Figure 1, over the entire 20 minute period following aeration, the two recombined milk samples decreased volume at a comparable rate to each other, yet at a much slower rate compared to controls. At the 20 minute time point, the volume of the recombined milk samples was significantly higher than the controls. Even though the 1.5% w/w fat control sample had the highest starting volume after aeration, its volume dropped sharply in comparison to the 1.5% w/w fat recombined milk sample. A similarly sharp drop in volume is seen in the 3.3% w/w fat control sample compared to the 3.3% w/w fat recombined milk sample.

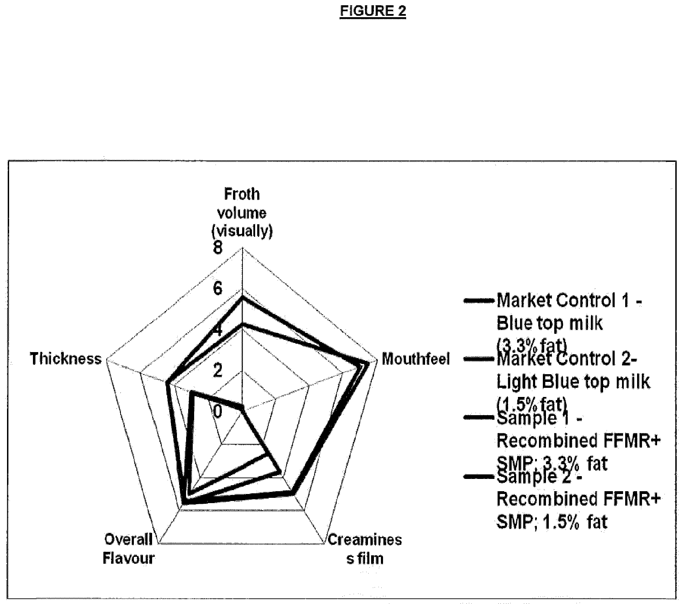

As shown in Figure 2, sensory perception data shows the two recombined milk samples convincingly outperformed the market controls on every aspect except overall flavour, where no difference was seen between the controls and test samples. The 1.5% fat recombined milk sample convincingly also performed better than the 3.3% recombined milk on the grounds of visual froth, yet the remaining characteristics between the two samples were almost identical.

This shows that both 1.5% and 3.3% w/w fat recombined milk performed significantly well compared to regular commercial milks for total volume over time. Additionally, it shows that a lower fat content in recombined milk still retains very high sensory perception characteristics attributed by the formation and retention of bubbles/froth, which contributes the rich mouthfeel when collapsed in the mouth.

### Example 5 (not according to the present invention): Effect of fat content to bubble formation and stability and effect of spray drying

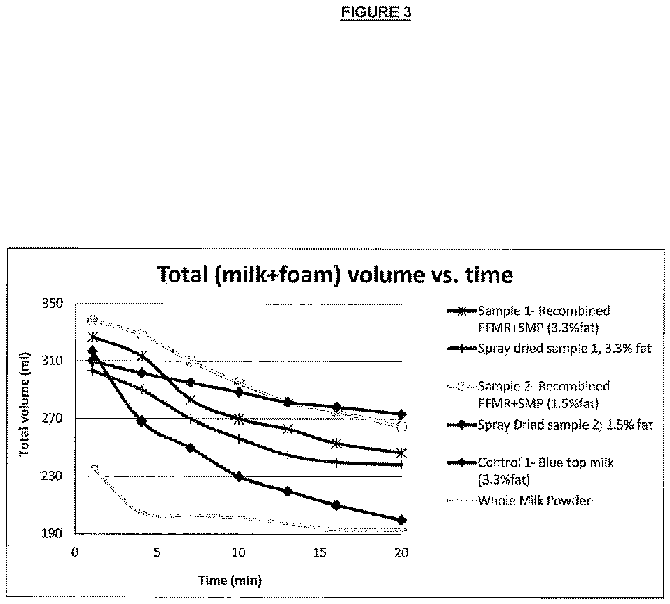

Figure 3 illustrates the effect of working with spray-dried samples. It is evident that the beneficial effects in terms of bubble retention are present. Though the initial volume in the reconstituted beverage being lower than working directly from recombined milk, yet most of the functional properties in terms of froth formation and retention were retained after spray drying. Our spray dried samples were also compared with commercial available whole milk powder (WMP).

As shown in Figure 3, when whole milk powder (WMP) reconstituted at 12 % (w/w) was tested, (3.38 % w/w fat), the total starting volume was comparatively low and quickly dropped to a base level within five minutes after aeration. This compared to the 1.5 and 3.3 % w/w fat recombined milk samples (spray dried), which had a dramatic increase in starting volume just following aeration, and had very good volume retention over the 20 minutes trial period.

The exact reasoning for this huge difference, especially the poor performance of the WMP, is unclear, but potentially this may be a result of free fatty acids and milk fat globule membrane material (that contains phospholipids) present in the whole milk powder sample tested. Alternatively, it might be because WMP generally contains lecithins (as an additive), which are phospholipids. This will be discussed in relation to Example 6 below.

### Example 6 (not according to the present invention): Effect of phospholipid content on bubble formation and stability

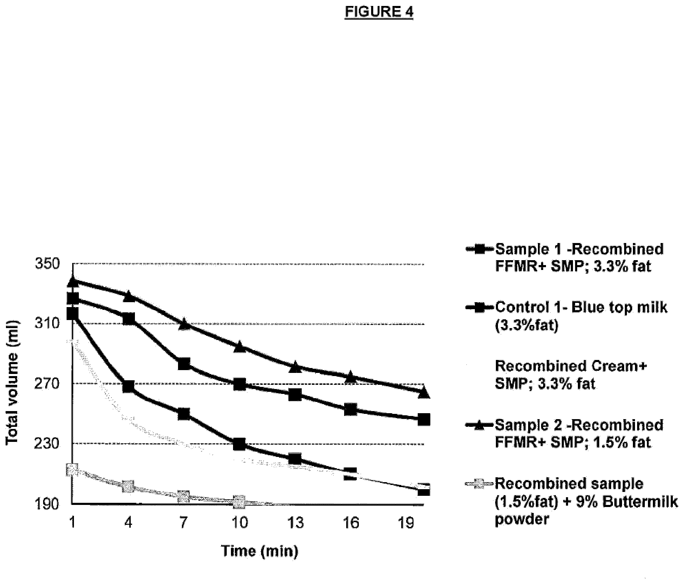

As shown in Figure 4, recombined milk was compared to samples with the milk fat (FFMR) substituted by cream, or the non-fat milk powder partially substituted by buttermilk powder. Both cream and buttermilk have phospholipids, whereas milk-fat such as FFMR, AMF, ghee or butter is substantially void of phospholipids.

The experiment shows that the phospholipid-containing samples performed significantly worse than both the recombined milk samples void of phospholipid. The phospholipid-containing samples performed similar to or even worse than the 3.3% w/w fat pasteurized-market control milk.

This shows that avoidance of phospholipids is an important advantage of the present invention.

### Example 7 (not according to the present invention): Effect of adding more skimmed milk powder (SMP)

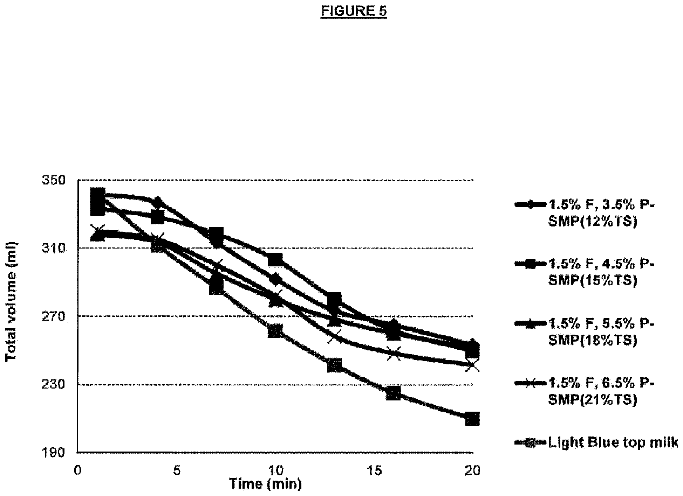

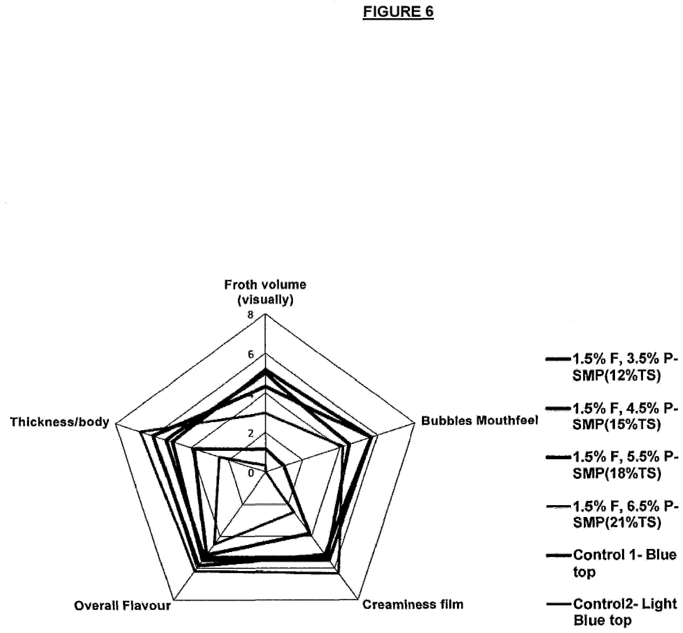

As shown in Figure 5, the addition of higher levels of SMP in the recombined milk did not significantly alter the bubble retention over a 20 minute test period, as total volume remained substantially unaltered regardless of the amount of SMP added. This is despite the viscosity of the sample increasing marginally (albeit at the cost of a lowered overall mouthfeel) when more SMP was present, as shown in Figure 6. This exemplifies the difficulty in finding a solution that effectively addresses a first issue such as increasing bubble retention without deleteriously resulting in a loss of another function such as mouthfeel. It also exemplifies that increased viscosity does not equate to increased bubble formation, as was expected.

### Example 8 (not according to the present invention): Effect of adding heat denatured whey protein concentrate (WPC)

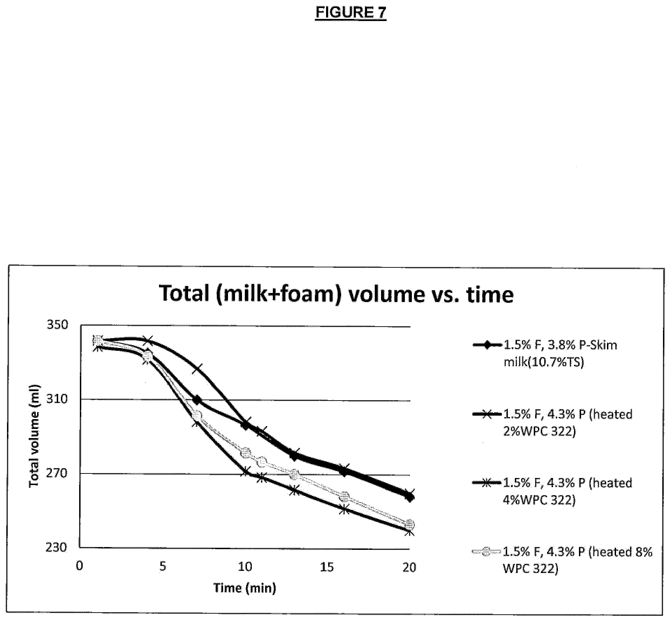

As shown in Figure 7, the addition of WPC (while keeping total protein consistent at 4.2% w/w, wherein the total protein from WPC was 0.8 % w/w) had only a very minor improvement in bubble retention when low concentration of heated WPC solution was added (2%). Yet at higher concentrations (4% and 8% heated WPC solution), the bubble retention actually diminished at a faster rate than recombined milk by itself

Although not shown, WPC actually also led to a loss of flavour and overall mouthfeel compared to recombined milk samples.

### Example 9 (not according to the present invention): Effect of adding an ultra-filtrated (UF) milk-based retentate vs. skim milk powder (SMP) for additional protein

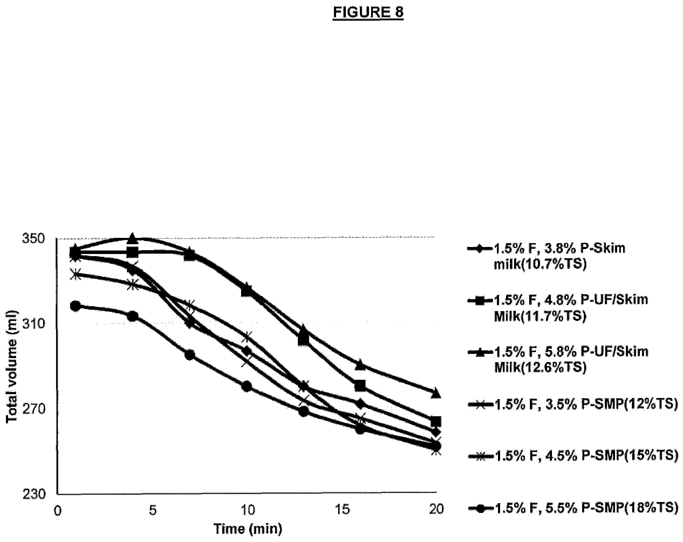

As shown in Figure 8, the addition of a high protein UF retentate substantially increased bubble retention over the 20 minute period (and particularly over the first 10 minutes) compared to the base invention (just recombined milk) as well as samples of similar protein content made with increased levels of SMP.

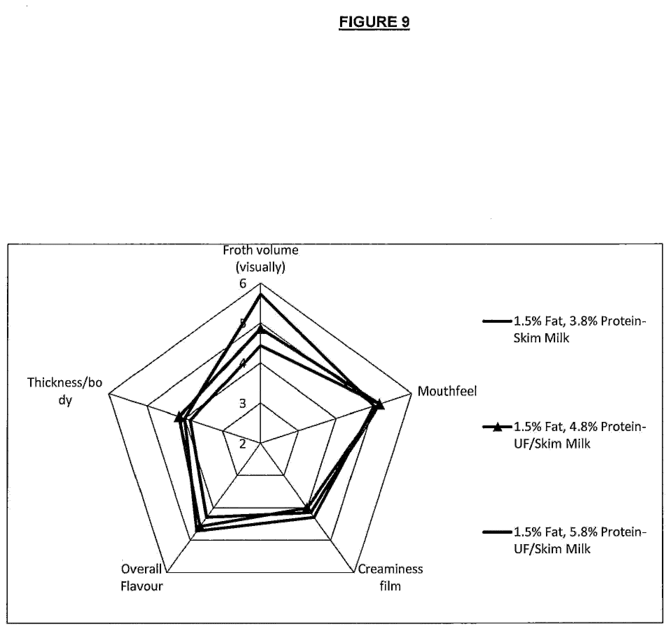

As shown in Figure 9, the sensory perception data illustrates that the UF retentate + recombined milk sample (red and green line) performed similarly to recombined milk alone in terms of mouthfeel but better in terms of bubble retention. This illustrates that the retentate did not negatively affect taste or overall perception of the beverage unlike added amounts of SMP.

### Example 10: Effect of adding heated milk-based retentate

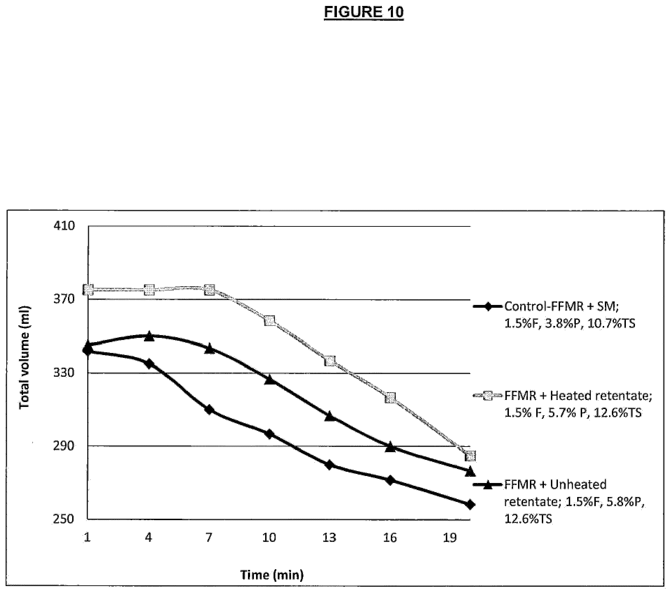

As shown in Figure 10, the addition of the heated UF retentate substantially further improved both the froth volume and bubble retention over the 20 minute trial period compared to un-heated UF retentate sample.

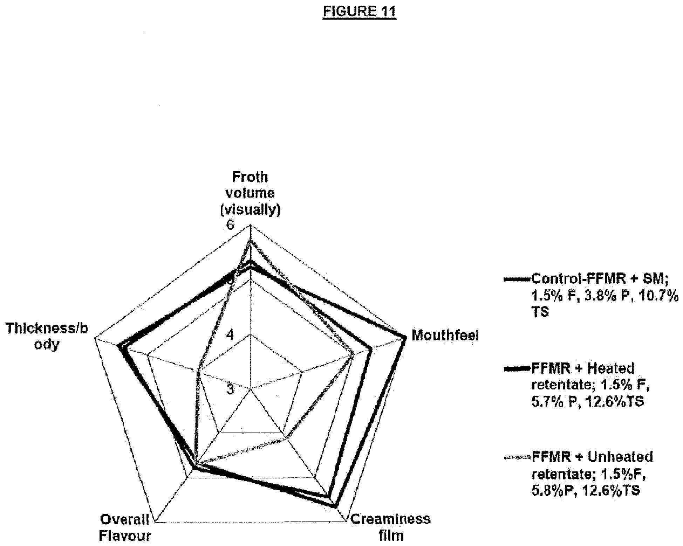

As shown in Figure 11, the heated UF retentate also showed very good sensory perception characteristics (mouthfeel and creaminess) over unheated UF retentate sample.

In Figures 10 and 11, the control sample refers to the baseline sample with recombined milk, yet without retentate.

### Example 11 : Effect of different whisking speeds to aerate the samples

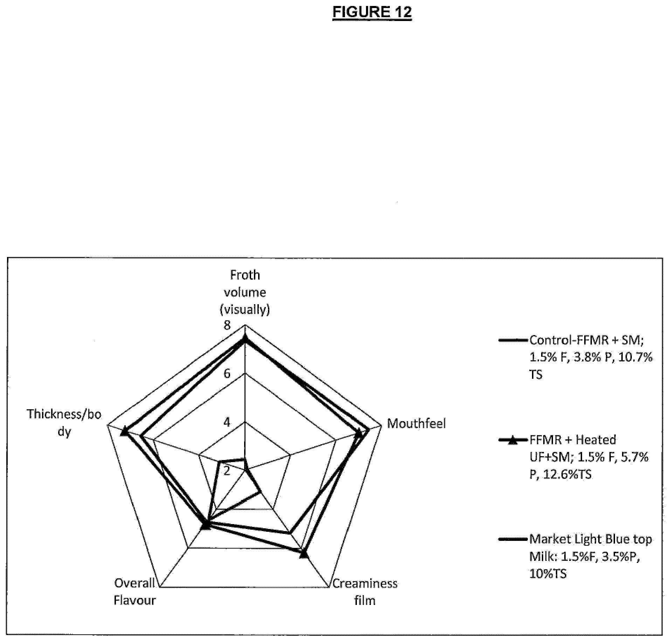

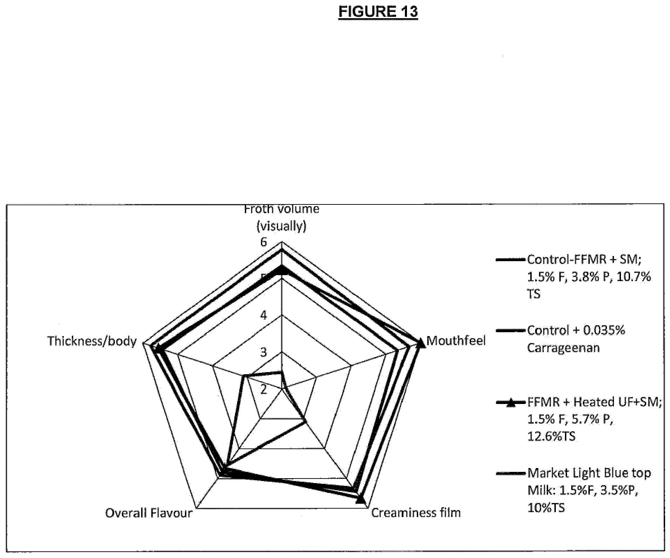

As shown in Figures 12 and 13, a high speed (13000 rpm for 30 sec) and low speed (9000 rpm for 40 sec) whisking test was performed to assess any differences in overall sensory perception.

Very good results were seen compared to regular market pasteurized milk samples undergoing the same treatment. Overall flavour was not affected by whisking speed, regardless of whether the retentate was present or not. At low speed (Figure 13), the test samples were compared to the formulation containing non-dairy ingredient Carrageenan, which is commercially available and widely used to improve the mouthfeel of the dairy beverage. Results showed that compared to a formulation containing Carrageenan, the retentate-recombined milk sample performed approximately the same, and in some cases (mouthfeel and creaminess) better. This is a highly relevant result considering the hurdle of only utilizing milk-based products to achieve the same result

In Figures 12 and 13, the control sample refers to the baseline sample with recombined milk, yet without retentate.

### Example 12: Visual assessment of froth

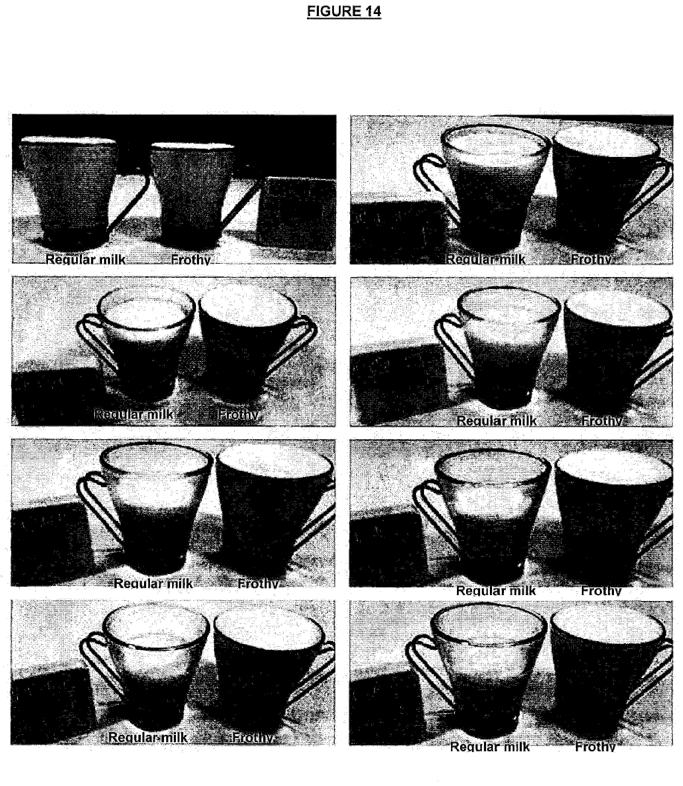

As shown in Figure 14, a study was conducted to compare froth stability between market regular milk (Light blue top milk; 1.5% fat, 3.5% protein) with a test frothy milk sample (FFMR + Heated retentate; 1.5% fat, 5.7 % protein) when whisked at high speed ( 13000rpm for 30sec).

The results show the test sample significantly outperformed the control milk sample during the 20 minute time trial.

### Example 13: Exemplary commercial applications

These are some examples of how the method of the present invention may be applied to commercial products (should not be seen as limiting):
1. Hot and cold application
2. Milk shakes, coffee, beverage at home
3. A ready to drink (RTD) beverage that can be aerated by shaking before drinking in the bottle itself or in a closed container.
4. Milk shakes, coffee beverage at cafe, food service or fast food outlets
5. RTD beverage- processed and stored under frozen, chilled and ambient conditions
6. Powder form
7. Smoothie
8. Ready to eat desserts
9. In capsules for coffee or beverage machines, as powder or liquid source of milk
10. Cold cappuccino
11. Blended with soy, juice etc.
12. Fortified with functional ingredients
13. Carbonated
14. Added/flushed with liquid nitrogen.

## Claims

1. A method of manufacturing a powdered or liquid dairy product **characterised by** the step of combining
a. a recombined milk, or dried or liquid components thereof, with
b. a milk-based retentate, wherein the milk-based retentate contributes 30 to 70% w/w of the total protein of the dairy product,
wherein the milk-based retentate is denatured prior to combining with the recombined milk, or dried or liquid components thereof and wherein the denaturing step includes heat denaturation at a temperature of between 85-90°C for a period of 20 to 40 minutes,
optionally wherein the dried component of recombined milk is selected from the group consisting of skimmed milk powder, partially defatted milk powder, protein rich dairy powder, dairy powder depleted in fat and lactose and combinations thereof.

2. The method of claim 1, wherein the milk-based retentate is an ultra-filtrated retentate

3. The method of claim 1 or 2, wherein the recombined milk has a fat content below 9 % w/w, for example between 0.5 to 4.5 % w/w.

4. The method of any one of the preceding claims, wherein the recombined milk has a phospholipid content of less than 0.01 % w/w, or between 0 and 0.02 % w/w.

5. The method of any one of the preceding claims, wherein the recombined milk includes at least 1% w/w protein, for example between 1 to 10 % w/w protein or between 3 to 8 % w/w protein or between 3.5 to 6 % w/w protein.

## Patentansprüche

1. Verfahren zum Herstellen eines pulverförmigen oder flüssigen Molkereiprodukts, **gekennzeichnet durch** den Schritt eines Kombinierens
a. einer rekombinierten Milch oder getrockneter oder flüssiger Komponenten davon, mit
b. einem Retentat auf Milchbasis, wobei das Retentat auf Milchbasis 30 bis 70 Gewichts-% des Gesamtproteins des Molkereiprodukts ausmacht,
wobei das Retentat auf Milchbasis vor einem Kombinieren mit der rekombinierten Milch oder getrockneten oder flüssigen Komponenten davon denaturiert wird und wobei der Denaturierungsschritt eine Hitzedenaturierung bei einer Temperatur zwischen 85 und 90 °C über einen Zeitraum von 20 bis 40 Minuten umfasst,
optional wobei die getrocknete Komponente der rekombinierten Milch ausgewählt ist aus der Gruppe bestehend aus Magermilchpulver, teilentfettetem Milchpulver, proteinreichem Milchpulver, fett- und laktosearmem Milchpulver und Kombinationen davon.

2. Verfahren nach Anspruch 1, wobei das Retentat auf Milchbasis ein ultrafiltriertes Retentat ist.

3. Verfahren nach Anspruch 1 oder 2, wobei die rekombinierte Milch einen Fettgehalt von weniger als 9 Gewichts-%, beispielsweise zwischen 0,5 und 4,5 Gewichts-%, aufweist.

4. Verfahren nach einem der vorhergehenden Ansprüche, wobei die rekombinierte Milch einen Phospholipidgehalt von weniger als 0,01 Gewichts-% oder zwischen 0 und 0,02 Gewichts-% aufweist.

5. Verfahren nach einem der vorhergehenden Ansprüche, wobei die rekombinierte Milch mindestens 1 Gewichts-% Protein, beispielsweise zwischen 1 und 10 Gewichts-% Protein oder zwischen 3 und 8 Gewichts-% Protein oder zwischen 3,5 und 6 Gewichts-% Protein beinhaltet.

## Revendications

1. Procédé de fabrication d'un produit laitier en poudre ou liquide **caractérisé par** l'étape de combinaison de
a. un lait recombiné, ou des composants séchés ou liquides de celui-ci, avec
b. un rétentat à base de lait, dans lequel le rétentat à base de lait contribue à hauteur de 30 à 70 % p/p à la protéine totale du produit laitier,
dans lequel le rétentat à base de lait est dénaturé avant la combinaison avec le lait recombiné, ou avec les composants séchés ou liquides de celui-ci et dans lequel l'étape de dénaturation comprend une dénaturation thermique à une température comprise entre 85 et 90° C pendant une période de 20 à 40 minutes,
facultativement, dans lequel le composant séché du lait recombiné est choisi dans le groupe constitué de poudre de lait écrémé, poudre de lait partiellement dégraissé, poudre laitière riche en protéines, poudre laitière appauvrie en matières grasses et en lactose et des combinaisons de celles-ci.

2. Procédé selon la revendication 1, dans lequel le rétentat à base de lait est un rétentat ultra-filtré.

3. Procédé selon la revendication 1 ou 2, dans lequel le lait recombiné comporte une teneur en matières grasses inférieure à 9 % p/p, par exemple entre 0,5 et 4,5 % p/p.

4. Procédé selon l'une quelconque des revendications précédentes, dans lequel le lait recombiné comporte une teneur en phospholipides inférieure à 0,01 % p/p, ou comprise entre 0 et 0,02 % p/p.

5. Procédé selon l'une quelconque des revendications précédentes, dans lequel le lait recombiné comprend au moins 1 % p/p de protéines, par exemple entre 1 à 10 % p/p de protéines ou entre 3 à 8 % p/p de protéines ou entre 3,5 à 6 % p/p de protéines.
